(19) **Europäisches Patentamt / European Patent Office / Office européen des brevets**

(11) **EP 4 589 546 A1**

(12) **EUROPEAN PATENT APPLICATION**

(43) Date of publication:
**23.07.2025 Bulletin 2025/30**

(21) Application number: **24204275.2**

(22) Date of filing: **02.10.2024**

(51) International Patent Classification (IPC):
**G06T 17/00** (2006.01)

(52) Cooperative Patent Classification (CPC):
**G06T 17/005; G06T 2210/36**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2024 US 202463622541 P**
**07.05.2024 US 202418657747**

(71) Applicant: **HTC Corporation**
**Taoyuan City 330, (TW)**

(72) Inventors:
• **ODDING, Aart Victor**
**330 Taoyuan City (TW)**
• **HUANG, Yi-Jie**
**330 Taoyuan City (TW)**
• **HORGAN, Mark John**
**330 Taoyuan City (TW)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(54) **METHOD FOR GENERATING AN OPTIMAL TREE FOR RENDERING OR STREAMING A 3D MODEL, HOST, AND NON-TRANSITORY STORAGE CIRCUIT**

(57) This disclosure provides a method for generating an optimal tree for rendering or streaming a 3D model. The method includes: obtaining a complete tree of a 3D model; obtaining a quality value of a node of the complete tree of the 3D model; obtaining a visibility value of the node of the complete tree of the 3D model; determining an optimal tree of the 3D model based on the complete tree, the quality value, and the visibility value; and rendering the 3D model based on the optimal tree.

```
┌─────────────────────────────────────────────────────────┐
│      Obtaining a complete tree of a 3D model             │──S510
└─────────────────────────────────────────────────────────┘
                            │
                            ▼
┌─────────────────────────────────────────────────────────┐
│  Obtaining a quality value of a node of the complete     │──S520
│              tree of the 3D model                        │
└─────────────────────────────────────────────────────────┘
                            │
                            ▼
┌─────────────────────────────────────────────────────────┐
│ Obtaining a visibility value of the node of the complete │──S530
│              tree of the 3D model                        │
└─────────────────────────────────────────────────────────┘
                            │
                            ▼
┌─────────────────────────────────────────────────────────┐
│ Determining an optimal tree of the 3D model based on the │──S540
│   complete tree, the quality value, and the visibility   │
│                        value                             │
└─────────────────────────────────────────────────────────┘
                            │
                            ▼
┌─────────────────────────────────────────────────────────┐
│    Rendering the 3D model based on the optimal tree      │──S550
└─────────────────────────────────────────────────────────┘
```

500

**FIG. 5**

EP 4 589 546 A1

## Description

CROSS-REFERENCE TO RELATED APPLICATION

This application claims the priority benefit of U.S. provisional application serial no. 63/622,541, filed on January 19, 2024. The entirety of the above-mentioned patent application is hereby incorporated by reference herein and made a part of this specification.

## BACKGROUND

Technical Field

The disclosure relates to a method for generating an optimal tree for rendering or streaming a 3D model; particularly, the disclosure relates to a method for generating an optimal tree for rendering or streaming a 3D model, a host, and a non-transitory storage circuit.

Description of Related Art

In order to bring an immersive experience to user, technologies related to extended reality (XR), such as augmented reality (AR), virtual reality (VR), and mixed reality (MR) are constantly being developed. AR technology allows a user to bring virtual elements to the real world. VR technology allows a user to enter a whole new virtual world to experience a different life. MR technology merges the real world and the virtual world. Further, to bring a fully immersive experience to the user, visual content, audio content, or contents of other senses may be provided to the user over the web.

## SUMMARY

The disclosure is direct to a method for generating an optimal tree for rendering or streaming a 3D model, a host, and a non-transitory storage circuit, so as to provide an efficient and fast manner to provide the 3D models of XR to the user.

This disclosure provides a method for generating an optimal tree for rendering or streaming a 3D model. The method includes: obtaining a complete tree of a 3D model; obtaining a quality value of a node of the complete tree of the 3D model; obtaining a visibility value of the node of the complete tree of the 3D model; determining an optimal tree of the 3D model based on the complete tree, the quality value, and the visibility value; and rendering the 3D model based on the optimal tree.

This disclosure provides a host. The host includes a storage circuit and a processor. The storage circuit is configured to store a program code. The processor is coupled to the storage circuit and configured to access the program code to execute: obtaining a complete tree of a 3D model; obtaining a quality value of a node of the complete tree of the 3D model; obtaining a visibility value of the node of the complete tree of the 3D model; determining an optimal tree of the 3D model based on the complete tree, the quality value, and the visibility value; and rendering the 3D model based on the optimal tree.

This disclosure provides a non-transitory storage circuit. The non-transitory storage circuit is configured to store a program code and the program code is configured to cause a processor to execute: obtaining a complete tree of a 3D model; obtaining a quality value of a node of the complete tree of the 3D model; obtaining a visibility value of the node of the complete tree of the 3D model; determining an optimal tree of the 3D model based on the complete tree, the quality value, and the visibility value; and rendering the 3D model based on the optimal tree.

Based on the above, the 3D model of XR is provided to the user in an efficient and fast manner.

To make the aforementioned more comprehensible, several embodiments accompanied with drawings are described in detail as follows.

## BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1A is a schematic diagram of a tree structure of a 3D model according to an embodiment of the disclosure.
FIG. 1B is a schematic diagram of rendering results of a 3D model according to an embodiment of the disclosure.
FIG. 2A and FIG. 2B are schematic diagrams of displaying scenarios according to an embodiment of the disclosure.
FIG. 3A and FIG. 3B are schematic diagrams of displaying scenarios according to an embodiment of the disclosure.
FIG. 4A is a schematic diagram of an optimal tree of a 3D model according to an embodiment of the disclosure.
FIG. 4B and FIG. 4C are schematic diagrams of optimization processes of a tree structure of a 3D model according to some embodiments of the disclosure.
FIG. 5 is a schematic flowchart of a method for generating an optimal tree for rendering or streaming a 3D model according to an embodiment of the disclosure.
FIG. 6 is a schematic flowchart of a method for transforming a rendered tree to an optimal tree according to an embodiment of the disclosure.
FIG. 7 is a schematic diagram of a host according to an embodiment of the disclosure.

## DESCRIPTION OF THE EMBODIMENTS

Reference will now be made in detail to the exemplary embodiments of the disclosure, examples of which are illustrated in the accompanying drawings. Whenever possible, the same reference numbers are used in the drawings and the description to refer to the same or like components.

Certain terms are used throughout the specification and appended claims of the disclosure to refer to specific components. Those skilled in the art should understand that electronic device manufacturers may refer to the same components by different names. This article does not intend to distinguish those components with the same function but different names. In the following description and rights request, the words such as "comprise" and "include" are open-ended terms, and should be explained as "including but not limited to...".

In order to bring an immersive experience to user, technologies related to extended reality (XR), such as augmented reality (AR), virtual reality (VR), and mixed reality (MR) are constantly being developed. AR technology allows a user to bring virtual elements to the real world. VR technology allows a user to enter a whole new virtual world to experience a different life. MR technology merges the real world and the virtual world. Further, to bring a fully immersive experience to the user, visual content, audio content, or contents of other senses may be provided to a user device (e.g., any smart device or computing device) of the user over the web or may be loaded from a memory of the user device locally.

While a content of the XR, such as 3D geometry data of a 3D model, is displayed to the user (e.g., by streaming the 3D geometry data over the web or loading the 3D geometry data locally), it is important that the user does not need to wait a long time before being placed in a virtual world. That is, it is important that, a size of the 3D geometry data is preferably as small as possible to enable faster data transfer or loading. In other words, it is important that the process of displaying the 3D geometry data must be performant enough to not create a noticeable delay for the user when the user device is fetching the data.

For example, while the user is viewing the 3D geometry data through the user device, the traditional methods of loading a virtual scene in the virtual world often load all the data at once at startup (which causes long loading times), or load in data when a user representative object (e.g., avatar) of the user goes nearby a virtual object. Therefore, the user experience may be interrupted due to the waiting time of loading. In light of the above, it is the pursuit of people skilled in the art to provide an efficient and fast manner to provide the 3D geometry data to the user device.

In this disclosure, a novel method for rendering or streaming a 3D model is proposed. Based on a quality value and a visibility value of each node in a 3D model, an optimal tree may be determined. The 3D model may be rendered based on the optimal tree instead of a complete tree of the 3D model and the amount of the 3D geometry data may be decreased. Therefore, even if there is a limitation to the internet connection speed or the computing power of the user device, the 3D model may be still displayed to the user with little or no waiting time of loading, thereby increasing the user experience. Further details of the method will be discussed below with respect to the accompanying drawings.

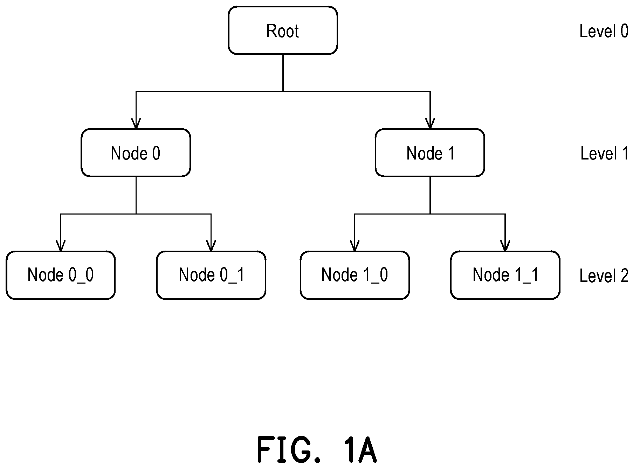

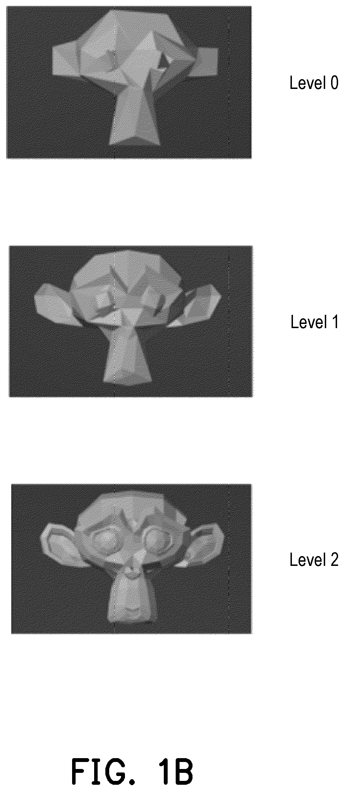

FIG. 1A is a schematic diagram of a tree structure of a 3D model according to an embodiment of the disclosure. FIG. 1B is a schematic diagram of rendering results of a 3D model according to an embodiment of the disclosure. It is noted that, for the sake of clarity to better understand the inventive concepts of the disclosure, FIG. 1A and FIG. 1B have been simplified. That is, although it is depicted that a tree structure of a 3D model includes 2 levels and each level of the tree structure includes 1 node or 2 nodes, the tree structure may include more levels and each level of the tree structure may include more nodes. However, this disclosure is not limited thereto.

Reference is first made to FIG. 1A. In one embodiment, given a 3D model that has been converted into a tree structure of pieces of geometry by a converter as shown in FIG. 1A, where each level in the tree structure represents a full model of the 3D model at a different quality by one or more nodes. Each node may represent a piece of geometry (e.g., mesh) of the 3D model. At the widest point in the tree structure (i.e., the bottom in FIG. 1A), a level 2 of the tree structure may include four nodes (i.e., Node 0_0, Node 0_1, Node 1_0, and Node 1_1). An original quality of the 3D model may be represented by a geometry formed by these four nodes. On the other hand, at a root of the tree structure (i.e., the top in FIG. 1A), a level 0 of the tree structure may include only one node, which may be referred to as a root node. The 3D model may be represented by one single simplified geometry formed by the root node.

Reference is now also made to FIG. 1B. With reference to FIG. 1A and FIG. 1B, in one embodiment, the tree structure in FIG. 1A may correspond to rendering results of FIG. 1B at each level. For example, by rendering the 3D model with the root node of the tree structure at level 0, a rendering result may be shown as the top of FIG. 1B, which may only have simplified features of the 3D model. Further, by rendering the 3D model with the two nodes (i.e., Node 0, Node 1) of the tree structure at level 1, a rendering result may be shown as the middle of FIG. 1B, which may have more features of the 3D model than the rendering result of level 0. Furthermore, by rendering the 3D model with the four nodes of the tree structure at level 2, a rendering result may be shown as the bottom of FIG. 1B, which may have the original quality of the 3D model. In addition, by displaying the rendering results through the user device, the 3D model in the virtual world may be displayed to the user with different qualities.

In order to provide a better user experience, while a request of viewing the 3D model is determined, the 3D model may be provided starting from the root node to make sure an instant result is rendered and details of the 3D model may be gradually improved by rendering more nodes from higher levels. Further, depending on a location from where the 3D model is being viewed, a different part of the tree structure may be loaded. For example, for the pieces of the 3D model that are close to the location or clearly visible in the view, the high-quality parts of the tree structure may be loaded. On the other hand, for the pieces of the 3D model that are further away from the location or less visible, the lower quality parts of the tree structure may be loaded.

In this manner, it is possible to optimize the apparent quality of a 3D render, while it is also possible to decrease the amount of network bandwidth required to stream the 3D model, and reducing the amount of geometry the rendering engine needs to process to create a final render.

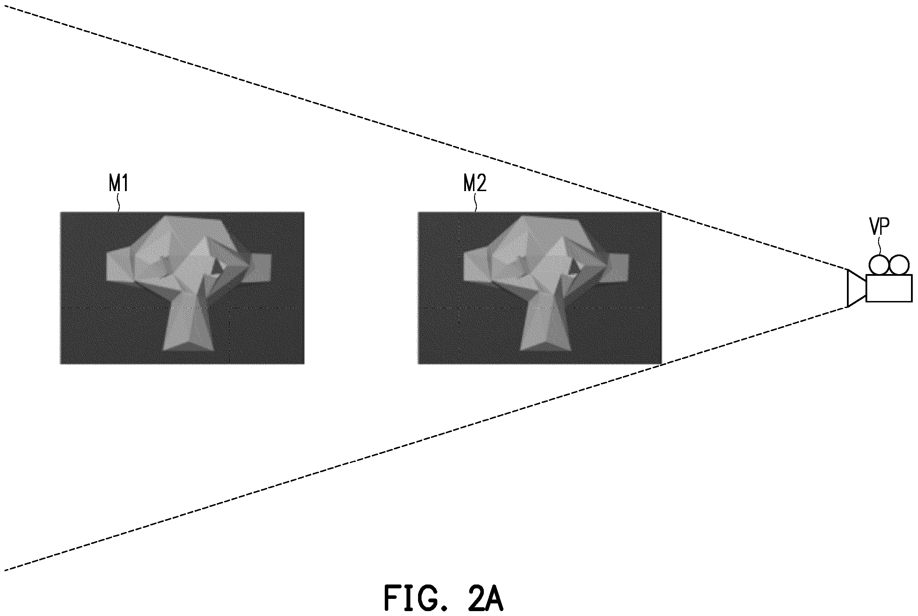

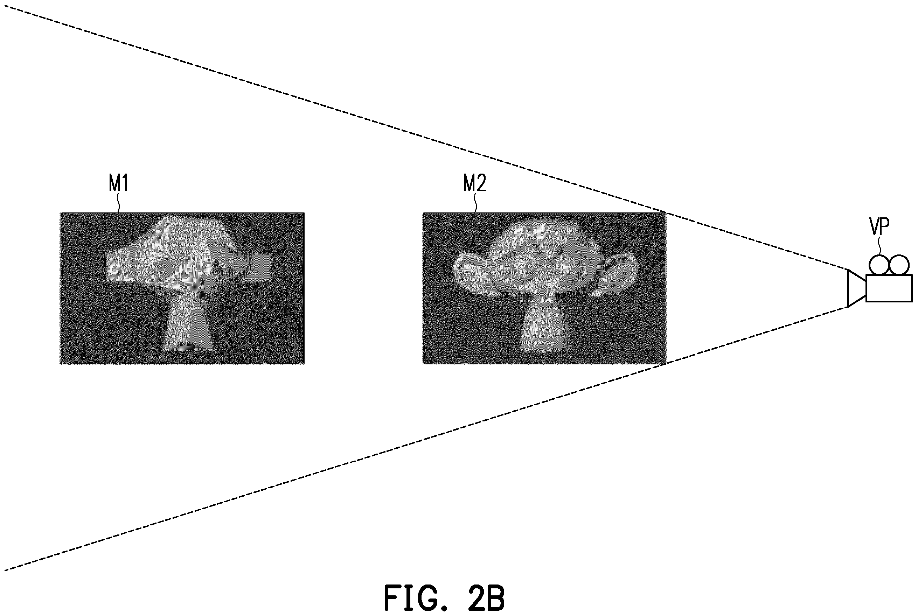

FIG. 2A and FIG. 2B are schematic diagrams of displaying scenarios according to some embodiments of the disclosure. FIG. 2A shows a displaying scenario of two 3D models in a virtual world, such as a model M1 and a model M2, when the two 3D models have just been loaded during an initial loading process at startup. FIG. 2B shows a displaying scenario of the two 3D models after an optimization process after being loaded based on a location of a viewer point VP. In one embodiment, the viewer point VP may be a virtual camera in the virtual world or the avatar in the virtual world. In addition, a distance from the viewer point VP to a 3D model may be determined based on a location of the viewer point VP and a viewing angle from the viewing point VP. However, this disclosure is not limited thereto.

Reference is first made to FIG. 2A. When the model M1 and the model M2 have just been loaded during an initial loading process at startup, the model M1 and the model M2 may be both rendered with the lowest details, for example, at the level 0. It is noteworthy that, in FIG. 2A, the viewer point VP is on the right-hand side. That is, the model M2 is closer to the viewer point VP and the model M1 is further away from the viewer point VP. Because the distance from viewer point VP to the model M1 is comparatively greater, the user may not focus much on the details of the model M1. That is, although the model M1 may be rendered with the lowest details, it may not bring a negative impact to the user experience. In other words, the model M1 may be in an optimal state already.

On the other hand, because the distance from viewer point VP to the model M2 is comparatively less, the user may focus more on the details of the model M2. That is, since the model M2 may be rendered with the lowest details, it may bring some negative impact to the user experience. In other words, the model M1 may be not yet in an optimal state. Therefore, in order to mitigate the negative impact brought by the model M2, the details of the model M2 may be improved. That is, when the initial loading process of the model M2 is completed, the model M2 may be continuously rendered for more details.

Reference is now made to FIG. 2B. After the initial loading processes of the model M1 and the model M2 have been completed, the model M1 may be remained with the lower details, for example, at the level 0, and the model M2 may be continuously rendered with the higher details, for example, at the level 2. However, this disclosure is not limited thereto. That is, in order to provide a better viewing experience for the user, the model M2 that is closer to the viewer point VP may be displayed with more details. On the other hand, in order to decrease the waiting time of loading, the model M1 that is further away from the viewer point VP may be displayed with less details. In other words, the model M1 and the model M2 may be both in their optimal states. In this manner, a good viewing experience may be provided with little or no waiting time of loading, thereby improving the user experience.

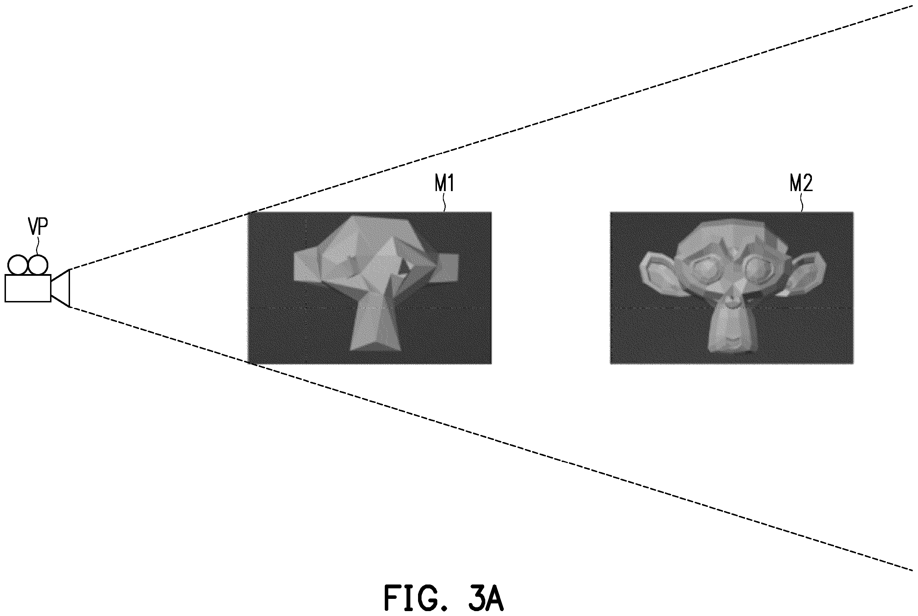

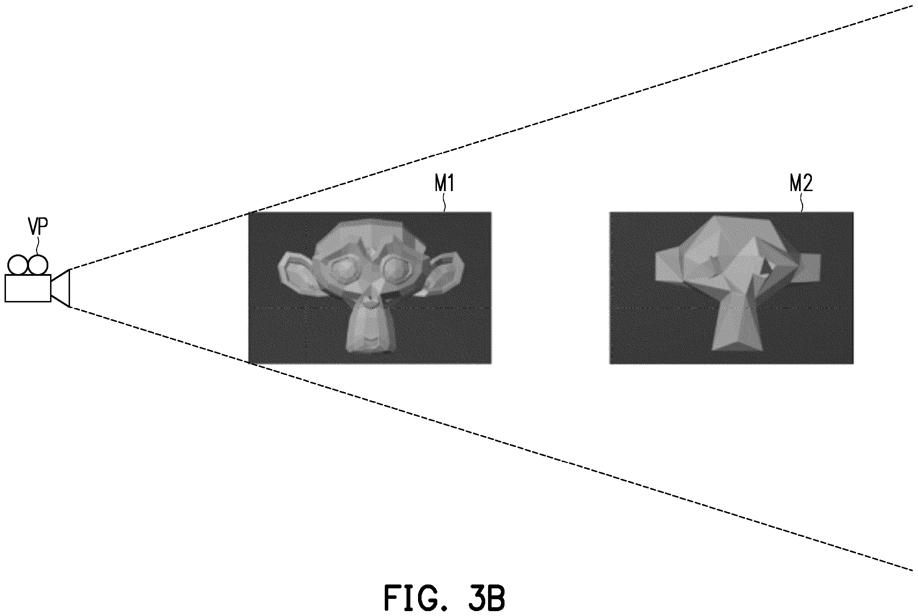

FIG. 3A and FIG. 3B are schematic diagrams of displaying scenarios according to an embodiment of the disclosure. FIG. 3A shows a displaying scenario of the two 3D models, when a location of the viewer point VP changes during runtime. FIG. 3B shows a displaying scenario of the two 3D models after an optimization process during runtime based on an updated location of a viewer point VP.

Reference is first made to FIG. 3A. After the startup, during runtime, the viewer point VP may be changed from the right-hand side to the left-hand side. That is, the model M1 may be now closer to the viewer point VP and the model M2 may be now further away from the viewer point VP. Because the distance from viewer point VP to the model M2 may be comparatively greater, the user may not focus much on the details of the model M2. However, the model M2 has been rendered with the higher details. That is, the details may be too many and it might be a waste of the computing power for keep displaying the model M2 like this. In other words, the model M2 may be no longer in the optimal state.

On the other hand, because the distance from viewer point VP to the model M1 may be comparatively less, the user may focus more on the details of the model M1. However, the model M1 was rendered with the lower details. That is, the details may be not enough and it might bring a negative impact to the user experience. In other words, the model M1 may be also no longer in the optimal state.

In short, because the location of the viewer point VP has changed, optimal states of the model M1 and the model M2 may also change accordingly. Therefore, in order to provide a better user experience, updated optimal states of the model M1 and the model M2 may be determined based on the updated location of the viewer point VP.

Reference is now made to FIG. 3B. During runtime, after the location of the viewer point VP changed, the model M1 and the model M2 may be rendered again based on the updated location of the viewer point VP. For example, the model M1 may be now rendered with higher details instead of lower details. On the other hand, the model M2 may be now rendered with lower details instead of higher details. That is, the model M1 and the model M2 may be both in their optimal states again. Therefore, the user experience may be improved.

It is noted that, for the sake of clarity to better understand the inventive concepts of the disclosure, it is depicted that the model M1 and the model M2 are two separated 3D models. However, in one aspect of the disclosure, the model M1 and the model M2 may be regarded as different parts of one single 3D model. In one embodiment, one of the model M1 and the model M2 may be visible to the viewer point VP (e.g. facing the viewer point VP) while the another one of the model M1 and the model M2 may not be visible to the viewer point VP. That is, even for one same 3D model, each part of the 3D model may be rendered with different levels of details based on the location of the viewer point VP, thereby improving the user experience.

It is necessary to point out that, if the internet connection speed over the web or the computing power of the user device is unlimited, it may be better to render all the 3D models in the virtual world with as higher details as possible. However, for most of the time, there is a limitation to the internet connection speed or the computing power. Therefore, a limitation may be accordingly applied to the 3D models to make sure a good user experience.

For example, as described above, a 3D model that is further away from the viewer point VP may be rendered with less details to save some time under a limitation of the internet connection speed or the computing power. Furthermore, in reality, distant objects are usually hazier to a user. In this manner, rendering distant models with less details may not only save some time under a limitation of the internet connection speed or the computing power, but may also make the user experience more authentic.

In addition, in order to provide a better user experience, during a rendering process of a 3D model, the internet connection speed or the computing power may be also took into consideration. For example, in order to make sure the waiting time of loading the 3D model is under a predetermined value or nearly zero, a maximum size of 3D geometry data of the 3D model may be determined based on the internet connection speed or the computing power. That is, the 3D model may be rendered starting from the root node and details of the 3D model may be gradually improved by rendering more nodes from higher levels until a size of the 3D geometry data is close to but not greater than the maximum size. In other words, the 3D model now may provide a good viewing experience with a little or no waiting time of loading and the state of the 3D model may be referred to as the optimal state.

In one embodiment, with reference to FIG. 1A to FIG. 3B, the optimal state of the model M1 or the model M2 may be represented by a tree structure of the 3D model, which may be referred to as an optimal tree. The optimal tree may be obtained by simplifying a complete tree structure of the 3D model (which may be referred to as a complete tree) based on the relationship between the viewer point VP and the model M1 or the model M2. However, this disclosure is not limited thereto. Moreover, when the model M1 or the model M2 has just been loaded, a tree structure of the model M1 or the model M2 with the lowest details may be referred to as an initial tree.

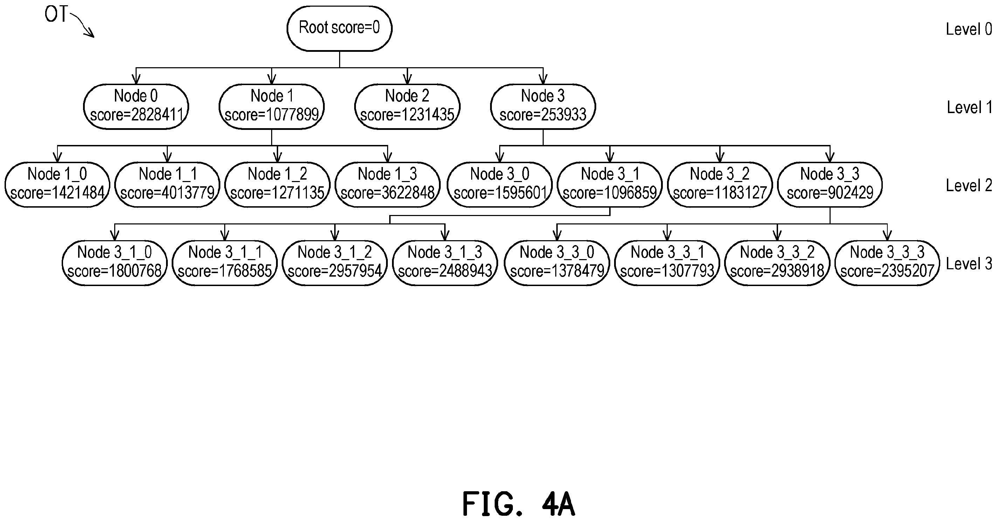

FIG. 4A is a schematic diagram of an optimal tree of a 3D model according to an embodiment of the disclosure. In FIG. 4A, when a 3D model is in an optimal state, a tree structure of the 3D model may be referred to as the optimal tree OT. The optimal tree OT may be obtained by simplifying a complete tree of the 3D model.

For example, a complete tree of the 3D model may include 5 levels and each node at a level 0 to a level 3 may include 4 nodes. That is, the complete tree may include $1 + 4 + 4\times4 + 4\times4\times4 + 4\times4\times4\times4 + 4\times4\times4\times4\times4 = 1365$ nodes. The 1365 nodes of the complete tree may be simplified based on a current location of the viewer point VP to obtain the nodes of the optimal tree OT. As shown in FIG. 4A, the optimal tree OT may include $1 + 4 + 4\times2 + 4\times2 = 21$ nodes instead of 1365 nodes. However, this disclosure is not limited thereto.

In one embodiment, the optimal tree OT may Node 0, Node 1, Node 2, and Node 3 for the level 1. The Node 0 and Node 2 may represent for the pieces further away from the viewer point VP. Therefore, no more details may be rendered for the Node 0 and the node 2 to reduce the size of the 3D geometry data of the 3D model. On the other hand, the Node 1 and Node 3 may represent for the pieces closer to the viewer point VP. Therefore, more details may be rendered for the Node 1 and the Node 3 to ensure a better viewing experience.

Similarly, the Node 3_1 and the Node 3_3 may represent for the pieces even more closer to the viewer point VP, so more details may be rendered for the Node 3_1 and the Node 3_3. On the other hand, the Node 1_0, Node 1_1, Node 1_2, Node 1_3, Node 3_0, and Node 3_2 may represent for the pieces comparatively less closer to the viewer point VP, so no more details may be rendered for the Node 1_0, Node 1_1, Node 1_2, Node 1_3, Node 3_0, and Node 3_2.

In one embodiment, 3D geometry data of the 3D model may be stored in a server remotely or stored in a memory locally. At startup of loading the 3D model, the user device may only receive the root node from the server or the memory. After the optimal tree OT is determined, the user device may be configured to request optimal data with respect to the optimal tree OT from the server or the memory. Further, the user device may be configured to receive the optimal data from the server or the memory and render the 3D model based on the optimal tree and the optimal data. In this manner, only necessary data will be transferred over the web or internally, thereby improving the user experience.

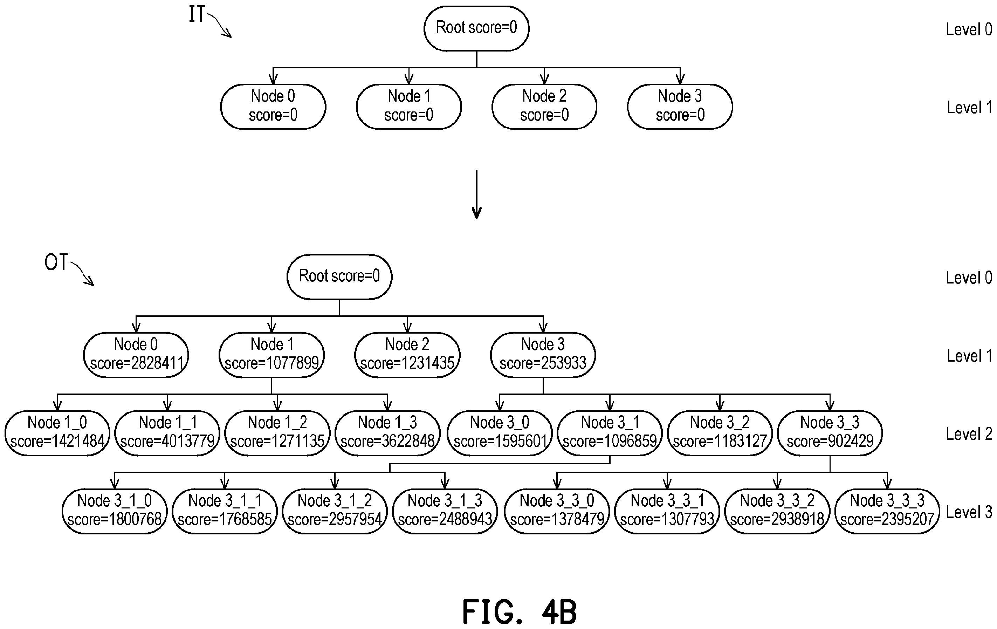

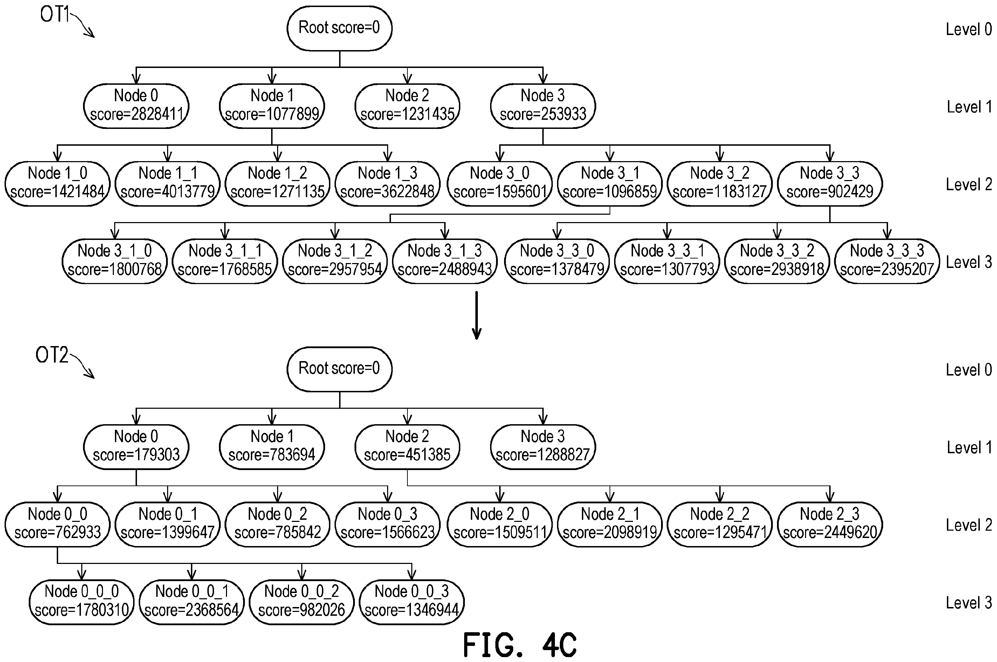

FIG. 4B and FIG. 4C are schematic diagrams of optimization processes of a tree structure of a 3D model according to some embodiments of the disclosure. FIG. 4B may correspond to a transformation process from FIG. 2A to FIG. 2B, when the model M1 and the model M2 have just been loaded during a loading process at startup. FIG. 4C may correspond to a transformation process from FIG. 3A to FIG. 3B, when a location of the viewer point VP has changed during runtime.

Reference is first made to FIG. 4B. When a 3D model has just been loaded, the 3D model may be rendered with a comparatively lower details (e.g., including 2 levels of nodes only) to provide an instant result and a tree structure representing the 3D model during that time may be referred to as an initial tree IT (may be also referred as a rendered tree). Based on the location of the viewer point VP, the 3D model may be rendered with more details (e.g., including 4 levels of nodes) to make a tree structure representing the 3D model becoming the optimal tree OT. That is, a tree structure representing the 3D model may be transformed from the initial tree IT to the optimal tree OT. In this manner, after the transformation, since the tree structure representing the 3D model is in an optimal state, the user experience may be improved.

Reference is now made to FIG. 4C. During runtime, when the location of the viewer point VP changes, the optimal tree OT may need to change accordingly. That is, due to a change of the relationship between the viewer point VP and the 3D model, a tree structure representing the 3D model may be transformed from a first optimal tree OT1 (also referred to as a rendered optimal tree) to a second optimal tree OT2 (also referred to as a current optimal tree). In this manner, after the transformation, since the tree structure representing the 3D model is in an optimal state, the user experience may be improved.

In one embodiment, a 3D model may include a plurality of meshes and each mesh may include a plurality of triangles. In the tree structure of the 3D model, a node of the tree structure may represent a mesh of the 3D model. That is, each node of the tree structure may represent a plurality of triangles. Therefore, in one embodiment, a hard limit on the amount of triangles to load and show for displaying the 3D model may be referred to as a "triangle budget". In one embodiment, there may be a limitation to the internet connection speed or the computing power. Therefore, the triangle budget may be used as a limitation to the 3D model when the internet connection speed or the computing power is limited. In other words, the value of triangle budget may be determined based on the internet connection speed or the computing power. However, this disclosure is not limited thereto.

In order to allocate the triangle budget to each part of a 3D model in an optimal manner, it is essential to establish an evaluation mechanism for each part of the 3D model. For example, with reference to FIG. 4A, FIG.

4B and FIG. 4C, each node in the optimal tree OT or the initial tree IT may have a score. A lower score may represent the node is with less details and a higher score may represent the node is with more details. That is, the score may be used to determine that whether a node of a tree structure is in an optimal state or not. Further, when comparing the scores of nodes in the tree structure, the scores may be used to determine a group of nodes in the tree structure that optimizes the visual quality while being restricted by the triangle budget.

In one embodiment, a score of a node may be defined as the quality of the node divided by the visibility of the node to the viewer point VP. However, this disclosure is not limited thereto. That is, a score of a node may be represented by the following equation.

$$\mathrm{Score} = \mathrm{Quality} \,/\, \mathrm{Visibility}$$

First of all, before finding out a score of a node in a tree structure, it is important to define a metric for a quality of the node in the tree structure relative to (e.g., divided by) an original quality of the 3D model. For example, a quality value of node may be defined and the quality value may linearly correspond to a quality of the node. In one instance, a quality value of 1 may represent the full original quality of the 3D model, and a quality value of 0.5 may correspond to half the quality. However, this disclosure is not limited thereto. In other words, the quality value of a node may be used to measure the quality of a decimated geometry to its original, and the quality values of nodes may be used to compare qualities of different nodes with each other.

In one embodiment, one way used to determine the quality value of a node may use a triangle count of the node relative to (e.g., divided by) a triangle count in the original mesh (i.e., the complete mesh) represented by the node. In another embodiment, another way used to determine the quality value may use an amount of texels in the mesh compared to (e.g., divided by) an amount of texels in the original mesh. In yet another embodiment, these two ways may be combined, or any other metric can be used to determine the quality value. That is, this disclosure does not limit how the quality value is defined, as long as the quality values of nodes may be used to compare qualities of different nodes with each other.

Next, another important factor in the equation is the visibility. The visibility may be regarded as how visible the node is. In one embodiment, a visibility value of the visibility may be derived from a surface area of the mesh (used as an approximation of the size of the node) divided by a distance from the viewer point VP to the node. That is, for given two nodes to which the distance is the same, the one node with the larger surface area gets a higher visibility value. Likewise, if the surface area is the same for both nodes, the one node that is closer will get a higher visibility value. In other words, the visibility value may be inversely proportional to the distance. However, this disclosure is not limited thereto.

Then, based on these two values, the score for each node in the tree may be calculated and may be used to determine the optimal tree OT of a 3D model. For example, when quality of the node goes up, the score goes up. Alternatively, when the node is smaller on a screen of the user device (visibility goes down), the score also goes up. This makes sense because the score may represent the quality of the 3D model on the screen. If the 3D model is moved further away from the viewer point VP, then the same 3D model may be shown by less pixels, therefore the quality is higher. In some embodiments, some more parameters (e.g., from Occlusion Culling algorithm or ray intersection testing using the Halton sequences) that influence extra scaling on the distance factor may be used to finetune the behavior of the above described algorithm (may be referred to as "Scoring algorithm") used to determine the score. However, this disclosure is not limited thereto.

Now that each node has a score and the score is proportional to the quality that the node has from the viewer point VP. Based on the scores of the nodes in the tree structure, an optimal group of nodes may be determined to display by starting at the root node. Further, when the amount of triangles being rendered is still within the triangle budget, the quality of the node with the lowest score may be continuously improved. That is, a node with lowest score may be selected to be improved. Therefore, a 3D model may look the best and also balanced in visual quality relative to distance of the nodes. For example, as shown in FIG. 4A, FIG. 4B, FIG. 4C, when a total triangle count of a tree structure of the 3D model is still within the triangle budget, the nodes with comparatively lower scores may be continuously rendered to improve a view experience. In one embodiment, the triangles may be allocated to the different parts of a geometry representing by the triangles. That is, the triangles may be evenly distributed in the tree structure to make a viewer recognize the geometry easily. In this manner, an overall total highest score for a whole virtual scene in the virtual world may be achieved in an efficient and fast manner, thereby improving the user experience.

In one embodiment, to further enhance the above process, an occlusion culling algorithm may be utilized. The occlusion culling algorithm is a way to make rendering faster by not rendering objects that are not visible to the viewer point VP. Unity and PlayCanvas are two different game engines that both utilize occlusion culling algorithm. Therefore, it is possible to implement occlusion culling algorithm efficiently utilizing the proposed method in both game engines.

First, in the Unity engine, in order to implement the occlusion culling algorithm utilizing the proposed method, Halton sequences may be employed to generate rays from the viewer point VP to the farthest clipped plane. To manage computational load, the raycasting task is divided into frames, distributing Halton sequence points across frames. For example, with 15,360 points, they are split into 60 frames, each with 256 rays. Hits are gradually displayed when rays intersect objects.

For occlusion culling, a key adjustment involves prioritizing the visibility of 3D models based on these hits. When a 3D model is hit, the 3D model is prioritized for rendering. That is, when a node of the 3D model is hit by a ray from the viewer point VP, the visibility value of the node may be increased. Further, after a set time without new hits, the mesh renderer for the 3D model may be disabled, effectively culling occluded 3D models. This tailored approach optimizes occlusion culling by dynamically adjusting the rendering priority based on real-time visibility cues provided by the Halton sequence-guided raycasting.

Second, in the PlayCanvas engine, in order to implement the occlusion culling algorithm utilizing the proposed method, it is necessary to point out that the occlusion culling algorithm in a web player makes use of occlusion queries which are a feature of graphics APIs including WebGL 2. The occlusion queries are done at intervals to determine whether a node is visible or not. The individual queries are spread out so that the individual queries don't all occur on one frame.

For occlusion culling, bounding boxes of the 3D model or the actual meshes of the 3D model are used in the occlusion queries. If no pixels of the geometry are rendered the node is considered occluded and is hidden. When the node is hidden, a frequency of the queries may be doubled, so that the node reappears more quickly. That is, when a node of the 3D model is hidden, the visibility value of the node may be decreased to zero. The occlusion queries are "rendered" after the world opaque layer, so that there is an existing depth buffer to compare against. The occlusion queries don't write to the color or depth buffers, so the hidden nodes are invisible to the user and don't affect subsequent rendered layers.

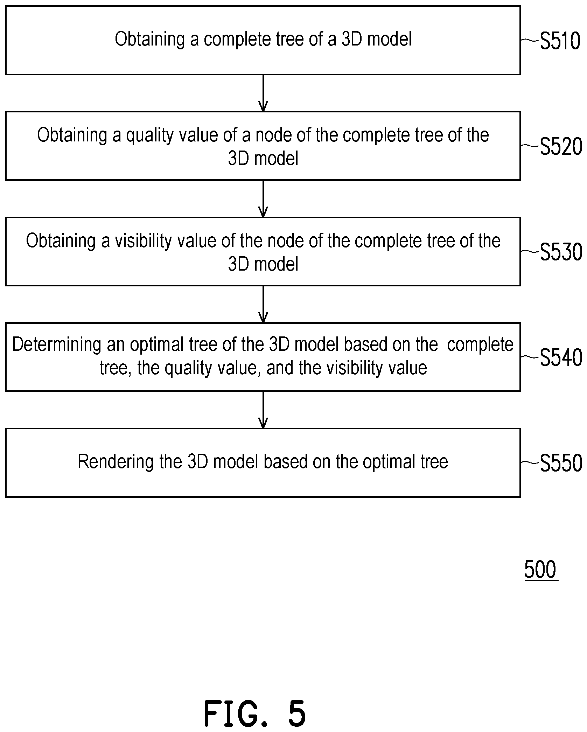

FIG. 5 is a schematic flowchart of a method for generating an optimal tree for rendering or streaming a 3D model according to an embodiment of the disclosure. With reference to FIG. 5, a method 500 for generating an optimal tree for rendering or streaming a 3D model may include a step S510, a step S520, a step S530, a step S540, and a step S550.

In the step S510, a complete tree of a 3D model may be obtained, for example, from the server remotely or from the memory locally. In the step S520, a quality value of a node of the complete tree of the 3D model may be obtained, for example, based on a triangle count of the node. In the step S530, a visibility value of the node of the complete tree of the 3D model may be obtained, for example, based on a location of the viewer point VP. In the step S540, an optimal tree OT of the 3D model, as shown in FIG. 4A, FIG. 4B and FIG. 4C, may be determined based on the complete tree, the quality value, and the visibility value. In the step S550, the 3D model may be rendered based on the optimal tree OT. It is noted that, the implementation details of the method 500 may be referred to the description with respect to FIG. 4A, FIG. 4B and FIG. 4C, while the details are not redundantly described seriatim herein.

In this manner, it is possible to optimize the apparent quality of a 3D render, while it is also possible to decrease the amount of network bandwidth required to stream the 3D model, and reducing the amount of geometry the rendering engine needs to process to create a final render.

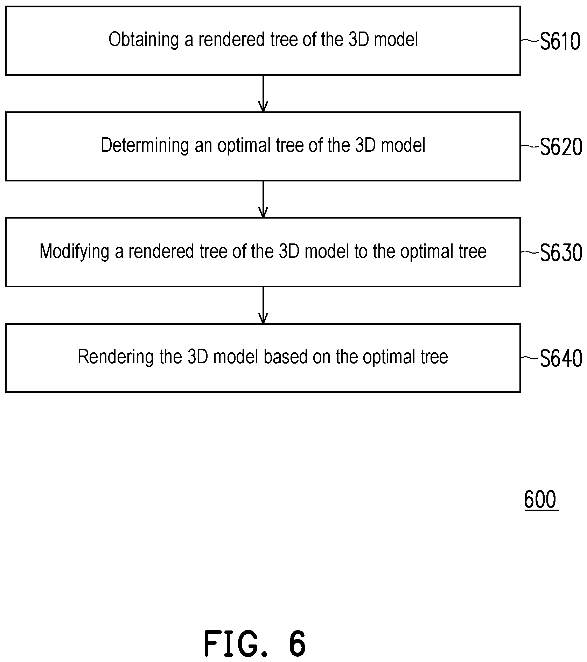

FIG. 6 is a schematic flowchart of a method for a method for transforming a rendered tree to an optimal tree according to an embodiment of the disclosure. With reference to FIG. 5, a method 600 for transforming a rendered tree to an optimal tree may include a step S610, a step S620, a step S630, and a step S640.

In the step S610, a rendered tree of the 3D model may be obtained. For example, the rendered tree may be the initial tree IT of FIG. 4B or the first optimal tree OT1 of FIG. 4C, but this disclosure is not limited thereto. In the step S620, an optimal tree OT of the 3D model may be determined. For example, the optimal tree OT may be the optimal tree OT of FIG. 4B or the second optimal tree OT2 of FIG. 4C, but this disclosure is not limited thereto. In the step S630, the rendered tree of the 3D model may be modified, for example, transform based on a current location of the viewer point, to the optimal tree OT, such as the transformation process shown in FIG. 4B or FIG. 4C. In the step S640, the 3D model may be rendered based on the optimal tree OT. It is noted that, the implementation details of the method 600 may be referred to the description with respect to FIG. 4B and FIG. 4C, while the details are not redundantly described seriatim herein.

In this manner, even if there is a change of the relationship between the viewer point VP and the 3D model, the 3D model may still be provided to the user in an efficient and fast manner.

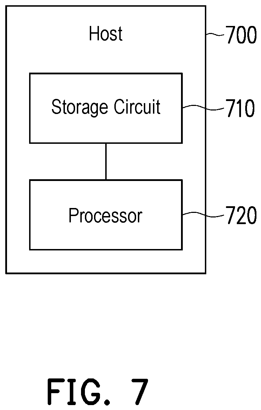

FIG. 7 is a schematic diagram of a host according to an embodiment of the disclosure. In various embodiments, a host 700 may be any smart device and/or computer device. In some embodiments, the host 700 may be any electronic device capable of providing reality services (e.g., AR/VR/MR services, or the like). In some embodiments, the host 700 may be a computer and/or a server, and the host 700 may provide the computed results (e.g., rendering result) to other external display device(s), such that the external display device(s) can show the computed results to the user. However, this disclosure is not limited thereto.

In FIG. 7, the host 700 includes a (non-transitory) storage circuit 710 and a processor 720. The storage circuit 710 may be one or a combination of a stationary or mobile random access memory (RAM), read-only memory (ROM), flash memory, hard disk, or any other similar device, and which is configured to store a plurality of modules and/or a program code that can be executed by the processor 720.

The processor 720 may be coupled with the storage circuit 710, and the processor 720 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In one embodiment of the disclosure, the processor 720 may be configured to access the modules and/or the program code stored in the storage circuit 710 to implement the method 500 or the method 600, but is not limited thereto. In addition, the implementation details of the host 700 or the storage circuit 710 may be referred to the descriptions of FIG. 1 to FIG. 6, while the details are not redundantly described seriatim herein.

In summary, according to the method 500, the host 700, and the storage circuit 710, based on a quality value and a visibility value of each node in a 3D model, an optimal tree may be determined. The 3D model may be rendered based on the optimal tree instead of a complete tree of the 3D model and the amount of the 3D geometry data may be decreased. Therefore, even if there is a limitation to the internet connection speed or the computing power of the user device, the 3D model may be still displayed to the user with little or no waiting time of loading, thereby increasing the user experience.

It will be apparent to those skilled in the art that various modifications and variations can be made to the disclosed embodiments without departing from the scope or spirit of the disclosure. In view of the foregoing, it is intended that the disclosure covers modifications and variations provided that they fall within the scope of the following claims and their equivalents.

**Claims**

1. A method for generating an optimal tree for rendering or streaming a 3D model, comprising:

   obtaining a complete tree of a 3D model;
   obtaining a quality value of a node of the complete tree of the 3D model;
   obtaining a visibility value of the node of the complete tree of the 3D model;
   determining an optimal tree of the 3D model based on the complete tree, the quality value, and the visibility value; and
   rendering the 3D model based on the optimal tree.

2. The method according to claim 1, further comprising:

   determining the quality value based on a triangle count or an amount of texels of the node; and
   determining the visibility value based on a location of the viewer point.

3. The method according to claim 1, further comprising: determining the quality value based on a triangle count or an amount of texels of the node relative to a triangle count or an amount of texels of an original mesh represented by the node.

4. The method according to claim 1, further comprising: determining the visibility value based on a surface area of the node divided by a distance from a location of a viewer point to the node.

5. The method according to claim 1, further comprising:

    determining a score by dividing the quality value by the visibility value; and
    determining the optimal tree based on the score.

6. The method according to claim 1, further comprising: in response to a total triangle count of a tree structure of the 3D model being within a triangle budget, improving the quality of the node.

7. The method according to claim 1, further comprising:

    in response to the optimal tree being determined, requesting optimal data with respect to the optimal tree from a server or a memory;
    receiving the optimal data from the server or the memory; and
    rendering the 3D model based on the optimal tree and the optimal data.

8. The method according to claim 1, further comprising: transforming a rendered tree to the optimal tree based on a location of a viewer point.

9. The method according to claim 1, further comprising:

    during an initial loading process at startup, rendering an initial tree; and
    transforming the initial tree to the optimal tree based on a location of a viewer point.

10. The method according to claim 1, further comprising: during runtime, in response to a change of a location of a viewer point, transforming a rendered optimal tree to a current optimal tree based on the location of the viewer point.

11. The method according to claim 1, further comprising:

    in response to the node of the 3D model being hit by a ray from a viewer point, increasing the visibility value of the node.

12. The method according to claim 1, further comprising: in response to the node of the 3D model being hidden, decreasing the visibility value of the node to zero.

13. A host, comprising:

    a storage circuit, configured to store a program code; and
    a processor, coupled to the storage circuit and configured to access the program code to execute:

        obtaining a complete tree of a 3D model;
        obtaining a quality value of a node of the complete tree of the 3D model;
        obtaining a visibility value of the node of the complete tree of the 3D model;
        determining an optimal tree of the 3D model based on the complete tree, the quality value, and the visibility value; and
        rendering the 3D model based on the optimal tree.

14. The host according to claim 13, wherein the processor is further configured to

    determining the quality value based on a triangle count or an amount of texels of the node; and
    determining the visibility value based on a location of the viewer point.

15. A non-transitory storage circuit, configured to store a program code and the program code is configured to cause a processor to execute:

    obtaining a complete tree of a 3D model;
    obtaining a quality value of a node of the complete tree of the 3D model;
    obtaining a visibility value of the node of the complete tree of the 3D model;
    determining an optimal tree of the 3D model based on the complete tree, the quality value, and the visibility value; and
    rendering the 3D model based on the optimal tree.

FIG. 1A

Level 0

Level 1

Level 2

# FIG. 1B

FIG. 2A

EP 4 589 546 A1

FIG. 2B

FIG. 3A

FIG. 3B

**FIG. 4A**

IT ↘

Root score=0 — Level 0

Node 0 score=0 | Node 1 score=0 | Node 2 score=0 | Node 3 score=0 — Level 1

↓

OT ↘

Root score=0 — Level 0

Node 0 score=2828411 | Node 1 score=1077899 | Node 2 score=1231435 | Node 3 score=253933 — Level 1

Node 1_0 score=1421484 | Node 1_1 score=4013779 | Node 1_2 score=1271135 | Node 1_3 score=3622848 | Node 3_0 score=1595601 | Node 3_1 score=1096859 | Node 3_2 score=1183127 | Node 3_3 score=902429 — Level 2

Node 3_1_0 score=1800768 | Node 3_1_1 score=1768585 | Node 3_1_2 score=2957954 | Node 3_1_3 score=2488943 | Node 3_3_0 score=1378479 | Node 3_3_1 score=1307793 | Node 3_3_2 score=2938918 | Node 3_3_3 score=2395207 — Level 3

FIG. 4B

FIG. 4C

Obtaining a complete tree of a 3D model ~S510

Obtaining a quality value of a node of the complete tree of the 3D model ~S520

Obtaining a visibility value of the node of the complete tree of the 3D model ~S530

Determining an optimal tree of the 3D model based on the complete tree, the quality value, and the visibility value ~S540

Rendering the 3D model based on the optimal tree ~S550

500

# FIG. 5

Obtaining a rendered tree of the 3D model — S610

Determining an optimal tree of the 3D model — S620

Modifying a rendered tree of the 3D model to the optimal tree — S630

Rendering the 3D model based on the optimal tree — S640

600

FIG. 6

FIG. 7

| Europäisches Patentamt European Patent Office Office européen des brevets | **EUROPEAN SEARCH REPORT** | **Application Number** EP 24 20 4275 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEAN PIERRE CHARALAMBOS ET AL: "Optimized HLOD Refinement Driven by Hardware Occlusion Queries", 26 November 2007 (2007-11-26), ADVANCES IN VISUAL COMPUTING; [LECTURE NOTES IN COMPUTER SCIENCE], SPRINGER BERLIN HEIDELBERG, BERLIN, HEIDELBERG, PAGE(S) 106 - 117, XP019083487, ISBN: 978-3-540-76857-9 pages 106-117, * abstract * * sections 3.1, 4.1 "Visibility-Based HLOD Traversal" * | 1-15 | INV. G06T17/00 |
| A | CHARALAMBOS J P: "Virtual Multiresolution Screen Space Errors: Hierarchical Level-of-Detail (HLOD) Refinement Through Hardware Occlusion Queries", GEOMETRIC MODELING AND IMAGING--NEW TRENDS, 2006 LONDON, ENGLAND 05-06 JULY 2006, PISCATAWAY, NJ, USA,IEEE, 5 July 2006 (2006-07-05), pages 221-227, XP010927288, DOI: 10.1109/GMAI.2006.47 ISBN: 978-0-7695-2604-1 * abstract * * page 1, right-hand column, line 3 - line 15 * * section 3. Overview * | 1-15 | |
| A | US 2017/091992 A1 (ROGERS DOUGLAS [US]) 30 March 2017 (2017-03-30) * paragraph [0056] - paragraph [0059]; claim 1; figure 6 * | 1-15 | TECHNICAL FIELDS SEARCHED (IPC) G06T |

-/--

The present search report has been drawn up for all claims

| Place of search | Date of completion of the search | Examiner |
|---|---|---|
| Berlin | 26 February 2025 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................
& : member of the same patent family, corresponding document

EPO FORM 1503 03.82 (P04C01)

European
Patentamt

European
Patent Office

Office européen
des brevets

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI RUI: "View-dependent Adaptive HLOD: real-time interactive rendering of multi-resolution models", CVMP '23: PROCEEDINGS OF THE 20TH ACM SIGGRAPH EUROPEAN CONFERENCE ON VISUAL MEDIA PRODUCTION, 30 November 2023 (2023-11-30), pages 1-10, XP093253320, * abstract * * section 3.2 Real-time view-dependent rendering * | 1-15 | |

TECHNICAL FIELDS
SEARCHED     (IPC)

The present search report has been drawn up for all claims

| Place of search | Date of completion of the search | Examiner |
|---|---|---|
| Berlin | 26 February 2025 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4275

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2025

| Patent document cited in search report | Publication date | Patent family member(s) | Publication date |
|---|---|---|---|
| US 2017091992 A1 | 30-03-2017 | NONE | |

For more details about this annex : see Official Journal of the European Patent Office, No. 12/82

EPO FORM P0459

**REFERENCES CITED IN THE DESCRIPTION**

**Patent documents cited in the description**

- US 63622541